# EUROPEAN PATENT SPECIFICATION

(11) **EP 3 985 505 B1**
(45) Date of publication and mention of the grant of the patent: **02.09.2026**
(21) Application number: 21174775.3
(22) Date of filing: 19.05.2021
(51) Int. Cl.: H04W 76/14, H04L 67/141, H04W 16/28, H04W 84/18

(54) **METHOD, APPARATUS, MOBILE TERMINAL, AND STORAGE MEDIUM FOR INTERACTING INFORMATION**
VERFAHREN, VORRICHTUNG, MOBILES ENDGERÄT UND SPEICHERMEDIUM FÜR INTERAGIERENDE INFORMATIONEN
PROCÉDÉ, APPAREIL, TERMINAL MOBILE ET SUPPORT D'ENREGISTREMENT POUR L'INTERACTION D'INFORMATIONS

(30) Priority: 14.10.2020 CN 202011097459
(43) Date of publication of application: 20.04.2022
(73) Proprietor: Beijing Xiaomi Mobile Software Co., Ltd., Beijing 100085 (CN)
(72) Inventor: DU, Xutao, Beijing, 100085 (CN); LIU, Ming, Beijing, 100085 (CN)
(74) Representative: dompatent

(56) References cited:
- EP-B1- 3 243 359
- WO-A1-2016/126418
- US-A1- 2017 280 492

## Description

### TECHNICAL FIELD

The invention relates to the field of data processing technologies of mobile terminals, and more particularly, to a method for interacting information, an apparatus for interacting information, and a storage medium.

### BACKGROUND

When realizing interconnection and intercommunication between a mobile terminal and other device, a complicated interaction process and connection confirmation may need to be performed between the mobile terminal and the other device. Especially, when the same mobile terminal connects to multiple devices, a selection operation may need to be performed first at the mobile terminal. When the multiple devices include devices of the same type from the same manufacturer, device names displayed for these devices are generally the same, which is another difficulty for the selection at the mobile terminal.

It is a technical problem that needs to be solved how to quickly and conveniently select the device to be connected at the mobile terminal. US2017280492A1 provides a technique for a communication apparatus to automatically connect to a device that has a function for wireless communication by an infrastructure connection and by a direct connection, in conformity with a connection setting of the device. A mobile terminal (communication apparatus) searches for surrounding MFPs (devices) and accepts a selection by a user of an MFP by displaying, on the operation panel, a screen of a list of MFPs discovered by the search. The mobile terminal first performs an infrastructure connection to an MFP selected by the user in the list screen displayed on the operation panel. When the infrastructure connection to the selected MFP fails, the mobile terminal performs a direct connection to that MFP. WO2016126418A1 relates to a second screen application operating on a client device presents a deduplicated listing of devices in a user interface, each listed device associated with one or more coupling protocols. A selection of a listed device is received via the user interface with which to participate in a video display session. Application status information is obtained from a control server for a first screen application of the selected device, the application status information indicating whether the first screen application is in an existing video display session with a second client device. A coupling methodology is determined based on the indicated application status and coupling protocols available to the client device and the one or more coupling protocols of the first screen application; and the client device couples to the first screen application via the determined coupling methodology. WO2016111556A1 relates to a method of wirelessly connecting a first device to a target device. The method includes searching for at least one device located in an orientation region of the first device, when a first input signal is received, determining the target device based on a direction that the first device is oriented, performing a wireless connection with the target device, and determining whether to maintain the wireless connection with the target device, when a second input signal is received.

### SUMMARY

According to a first aspect of the invention, a method for interacting information is provided as claimed in claim 1.

Further embodiments of the method are defined by the dependent claims.

According to a second aspect of the invention, an apparatus for interacting information is provided as claimed in claim 9.

Further embodiments of the apparatus are defined by the dependent claims.

According to a third aspect of the invention, a computer-readable storage medium is provided as claimed in 14.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a flow chart illustrating a method for interacting information, according to an exemplary embodiment.
FIG. 2 is a schematic diagram illustrating a search result interface, according to an exemplary embodiment.
FIG. 3 is a schematic diagram illustrating a search result interface, according to an exemplary embodiment.
FIG. 4 is a schematic diagram illustrating a search result interface, according to an exemplary embodiment.
FIG. 5 is a schematic diagram illustrating a search result interface, according to an exemplary embodiment.
FIG. 6 is a flow chart illustrating a method for interacting information, according to an exemplary embodiment.
FIG. 7 is a schematic diagram illustrating a search result interface, according to an exemplary embodiment.
FIG. 8 is a flow chart illustrating a method for interacting information, according to an exemplary embodiment.
FIG. 9 is a block diagram illustrating an apparatus for interacting information, according to an exemplary embodiment.
FIG. 10 is a block diagram illustrating an apparatus for interacting information, according to an exemplary embodiment.
FIG. 11 is a block diagram illustrating a device for interacting information, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The embodiments of the disclosure provide a method for interacting information. This method is applicable to a mobile terminal. The mobile terminal may be a computer device that may be used on the move, such as a mobile phone, a notebook computer, a tablet computer, and the like.

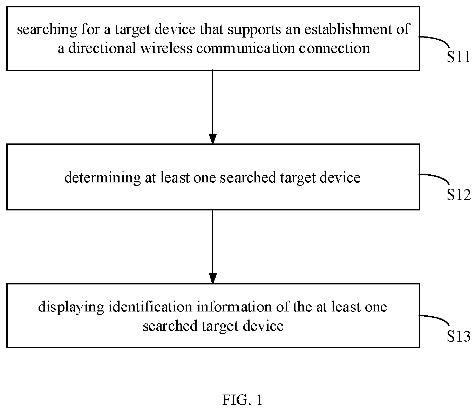

Referring to FIG. 1, FIG. 1 is a flow chart illustrating a method for interacting information, according to an exemplary embodiment. As illustrated in FIG. 1, the method may include the following.

At block S11, a target device that supports an establishment of a directional wireless communication connection is searched for.

At block S12, at least one searched target device is determined.

At block S13, identification information of the at least one searched target device is displayed.

The directional wireless communication connection refers to a wireless communication connection that may perform positioning and distance measurement. For example, the directional wireless communication connection refers to an ultra-wide band (UWB) connection.

When the mobile terminal is equipped with a UWB module, other devices equipped with UWB function modules may be discovered, or the mobile terminal may be discovered by other devices equipped with UWB function modules. After the discovery is completed, relative position information of other devices equipped with UWB function modules relative to the mobile terminal may be detected. The relative position information may include an angle between directional signals of the two and a distance between the two.

In some embodiments, the manner of searching for the target device at block S11 may include the following.

Manner 1: a broadcast scan signal is sent. The broadcast scan signal is configured to discover devices that support directional wireless communication connections. It is determined that the device matching the broadcast scan signal is the searched target device.

Or, manner 2: a broadcast scan signal is received. It is determined that the mobile terminal matches the broadcast scan signal, and the device of sending the broadcast scan signal is the searched target device.

In manner 1, the mobile terminal initiates a broadcast scan, and in manner 1, the other device (such as a TV equipped with a UWB function module) initiates a broadcast scan.

The broadcast scan signal is a broadcast signal. Other devices with the same type of directional wireless communication connection function may recognize this broadcast signal. The device that recognizes the broadcast signal may send a response signal. The response signal may carry identification information of the directional wireless communication connection function module of the device. After receiving the response signal, the mobile terminal may determine that the device of sending the response signal is a matched device.

For example, the mobile terminal has a UWB function module. The mobile terminal may send a UWB broadcast scan signal through the UWB function module. By receiving the response signal, at least one target device that sends the response signal is determined. The identifier of the UWB function module of each target device is learned, and the relative position of each matched target device and the mobile terminal is also known.

For the convenience of users, the mobile terminal may also be marked with an indicator of representing a direction of a UWB signal. For example, when the direction of the UWB signal is a direction that is perpendicular to an upper edge of the front of the mobile terminal and faces outward, the mobile terminal is marked with an upward arrow on the upper edge of the front of the device housing. Or, when a UWB instruction interface is opened, it is indicated on the interface that the direction of the UWB signal is a direction that is perpendicular to an upper edge of the front of the mobile terminal and faces outward.

In the embodiments, the device that supports the establishment of the directional wireless communication connection may be searched for. The searched device may be displayed, so that a user may learn about an available device that supports the establishment of the directional wireless communication connection, and employ characteristics of detecting positions and distances of the directional wireless communication connection to perform required operations, which improves the convenience of the operations and improves the user experience.

Embodiments of the disclosure provide a method for interacting information. The method may include actions illustrated in FIG. 1. Furthermore, the searching for the target device at block S11 may include: searching for the target device based on a set condition. The set condition may include: an angle between a directional signal of the target device and a directional signal of the mobile terminal being within a set angle range, and/or, a distance between the target device and the mobile terminal being within a set distance range.

In some embodiments, the set angle range is a range greater than or equal to a first angle and less than or equal to a second angle. The first angle is a difference between 180 degrees and a third angle. The second angle is a sum of 180 degrees and a fourth angle. The third angle and the fourth angle are both less than 90 degrees. The third angle and the fourth angle may be the same or different.

For example: the set angle range is (175 degrees, 185 degrees), (170 degrees, 190 degrees), [170 degrees, 190 degrees], (160 degrees, 200 degrees), [160 degrees, 200 degrees], (150 degrees, 210 degrees), (170 degrees, 200 degrees), etc.

The set distance range is related to a coverage capacity of a directional wireless communication signal. When a coverage range of the wireless communication signal is larger, a larger set distance range may be set. When a coverage range of the wireless communication signal is smaller, a smaller set distance range may be set.

For example: the set distance range is (3 meters, 10 meters), (2 meters, 15 meters), (2.5 meters, 12 meters), etc.

In the embodiments, by employing the function of detecting orientations and distances in the scanning process of the directional wireless communication connection, it is convenient and quick to determine the device whose angle and/or distance relative to the mobile terminal satisfy requirements, so that the user may easily and quickly determine the device needed to be connected, which may simplify the operation process of interconnection and intercommunication between devices and improve the user experience.

Embodiments of the disclosure provide a method for interacting information. The method may include actions illustrated in FIG. 1. Furthermore, the method may include the following.

At least one control is displayed, in which each control corresponds to one searched target device.

A touch signal for one control is received.

A target device corresponding to the control to which the touch signal belongs is determined.

A directional wireless communication connection with the determined target device is established.

A data processing function corresponding to the control is realized through the established directional wireless communication connection.

The data processing function corresponding to the control may be screen projecting, sending set data, etc.

In the embodiments, the control corresponding to the data processing function set may be displayed, so that after the user clicks the corresponding control for the target device to be used, the directional wireless communication connection with the target device may be established, and the corresponding data processing function may be executed automatically, which may simplify the user's operation flow.

The following two examples are used to explain in detail.

### Example 1:

The user may select a screen projecting function on a system setting interface of the mobile terminal and turn on a UWB function. The user may hold the mobile terminal to point to a TV with a UWB module. After the mobile terminal searches for the device that supports the establishment of the directional wireless communication connection, this TV is found. It is also known that the name of this TV is "XY TV in living room".

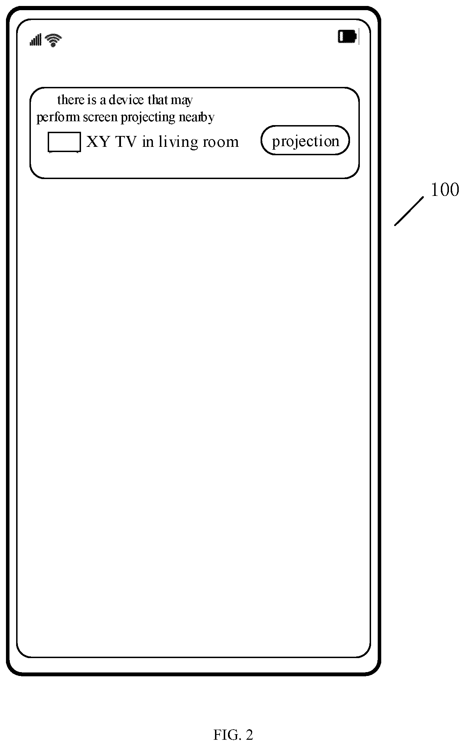

As illustrated in FIG. 2, a notification box is displayed on a current display interface of the mobile terminal 100. The notification box may display a prompt message of "there is a device that may perform screen projecting nearby", the name "XY TV in living room" of the TV, and the control displayed with the word "projection" and corresponding to the name of the TV (which is also called as a projection control).

After the user clicks on this projection control, it means that it is confirmed to send projecting data to the TV. After the mobile terminal 100 receives this click signal, it may automatically establish a UWB wireless connection with the TV, and send the projecting data of the mobile terminal 100 to the TV. The TV may receive the projecting data through the UWB wireless connection, and display the projecting data. Therefore, the mobile terminal 100 and the TV may play the same projecting data synchronously.

### Example 2:

The user may select a screen projecting function on a system setting interface of the mobile terminal and turn on a UWB function. After the mobile terminal searches for the device that supports the establishment of the directional wireless communication connection, two TVs are found. It is also known that the name of the first TV is "XY TV in living room", and the name of the second TV is "XY TV in bedroom".

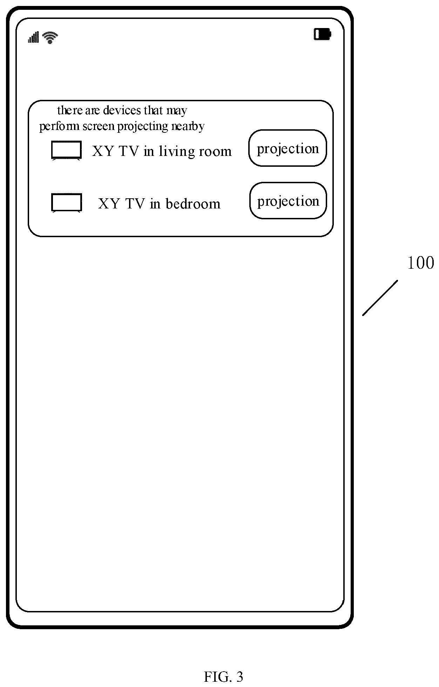

As illustrated in FIG. 3, a notification box is displayed on a current display interface of the mobile terminal 100. The notification box may display a prompt message of "there are devices that may perform screen projecting nearby", the name of each TV, and the control displayed with the word "projection" and corresponding to the name of each TV (which is also called as a projection control). The name of each TV corresponds to one control.

After the user clicks on the projection control corresponding to "XY TV in living room", it means that it is confirmed to send projecting data to this TV. After the mobile terminal 100 receives this click signal, it may automatically establish a UWB wireless connection with this TV, and send the projecting data of the mobile terminal 100 to this TV. This TV may receive the projecting data through the UWB wireless connection, and display the projecting data. Therefore, the mobile terminal 100 and this TV may play the same projecting data synchronously.

Embodiments of the disclosure provide a method for interacting information. The method may include actions illustrated in FIG. 1. Furthermore, the method may include the following.

Relative position information of the at least one searched target device and the mobile terminal is displayed.

The manner of displaying the relative position information of the at least one searched target device and the mobile terminal may include the following two manners.

Manner 1: information of each searched target device may be displayed in a form of list, and identification information of the target device and the relative position information of the target device and the mobile terminal may be displayed in a unit where each target device is located (this unit is a row or column).

Manner 2: at least one device area on a display interface may be determined, in which each device area corresponds to one searched target device; a distribution position of each device area on the display interface represents the relative position information of the corresponding target device and the mobile terminal.

In the embodiments, by displaying the relative position information, the user is provided with a visualized device distribution situation, so that the user may easily learn positions of surrounding devices that may receive directional wireless communication connections, to facilitate subsequent selection and employ.

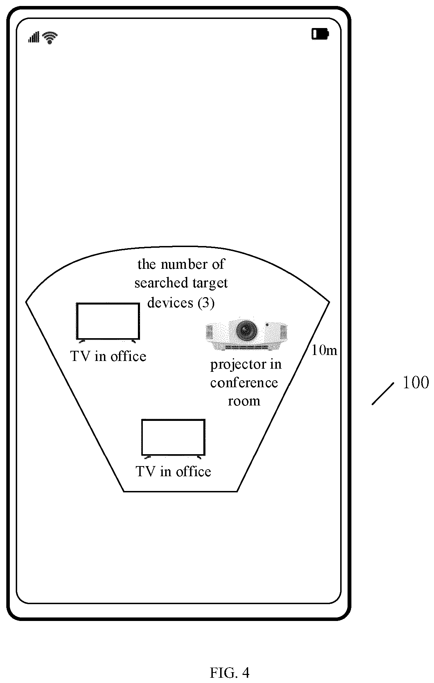

For example: as illustrated in FIG. 4, the number of searched target devices displayed in the search result interface is 3, including two TVs and one projector. The default names of the two TVs are both "TV in office" because the manufacturers of the two TVs are the same. The representative icon and name of each target device are displayed in the device area of the corresponding target device. The layout of the three devices displayed in the search result interface reflects the angle between the UWB signal of each device and the UWB signal of the mobile terminal 100 and the distance between each device and the mobile terminal 100. The search result interface also displays a fan-shaped area, and the fan-shaped area includes the device area corresponding to each target device. The position of the middle point of the bottom line segment of the fan-shaped area corresponds to the position of the mobile terminal 100. The distribution position of the device area in the fan-shaped area and corresponding to each target device in the fan-shaped area represents the relative position information of the corresponding target device and the mobile terminal 100. The "10m (meters)" displayed on the right side of the fan-shaped area indicates the length of the side line segment of the fan-shaped area. The user may estimate the distance between each target device and the mobile terminal 100 based on the length of the side line segment. It may be seen from the search result interface that the distance between the lowest TV and the mobile terminal 100 is the closest, and the angle of corresponding UWB signals is closest to 180 degrees.

In some embodiments, the method may further include the following. At least one of the following information of the device may be displayed in the search result interface: the icon of the device, the name of the device, whether the UWB connection has been established with the mobile terminal, the distance to the mobile terminal, the angle between the transmitted directional signal and the transmitting direction of the directional signal transmitted by the mobile terminal, and indicating information for indicate that the angle between the transmitted directional signal and the transmitting direction of the directional signal transmitted by the mobile terminal is closest to 180 degrees (for example, this indicating information is "pointing at this device" "aligning with this device"). By displaying the above-mentioned information of the target device, the user may learn more device-related information, which is convenient for the user to perform subsequent operations on the target device.

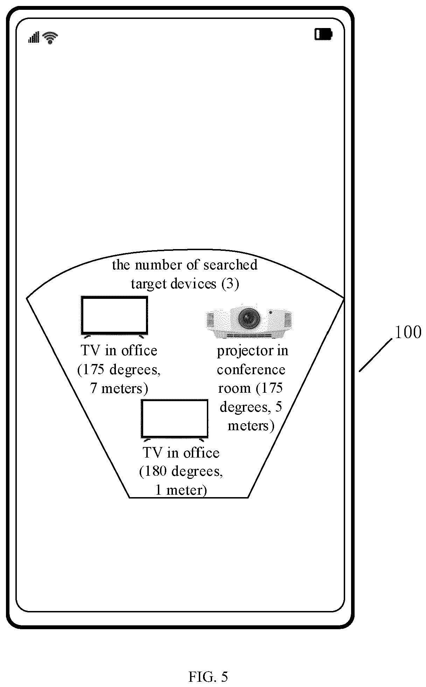

For example: in the search result interface illustrated in FIG. 5, compared to FIG. 4, the angle of corresponding UWB signals and the distance between each target device and the mobile terminal 100 are displayed in the device area of each target device, so that the user may check the accurate relative position of each target device and the mobile terminal 100. Because the specific distance between the target device and the mobile terminal 100 is illustrated in FIG. 5, there is no need to display the length of the side line segment of the fan-shaped area.

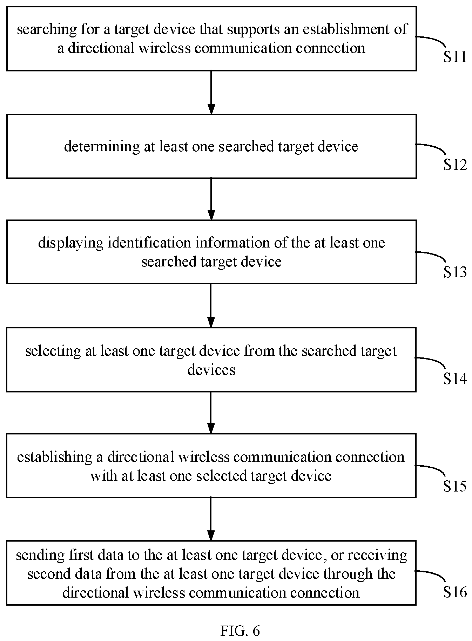

Embodiments of the disclosure provide a method for interacting information. The method may include actions illustrated in FIG. 1. Furthermore, the method may include the following as illustrated in FIG. 6.

At block S14, at least one target device is selected from the searched target devices.

At block S15, a directional wireless communication connection with at least one selected target device is established.

At block S16, first data is sent to the at least one target device, or second data is received from the at least one target device, through the directional wireless communication connection.

In some embodiments, selecting the at least one target device from the searched target devices at block S14 may include at least one of the following.

One, a touch signal is received, and a target device corresponding to a device area to which the touch signal belongs is selected.

Two, a target device corresponding to an angle closest to 180 degrees among angles between a directional signal transmitted by the mobile terminal and directional signals transmitted by the searched target devices, is selected.

Three, target devices corresponding to angles where differences with 180 degrees are less than a set angle among angles between a directional signal transmitted by the mobile terminal and directional signals transmitted by the searched target devices, is selected.

Four, a target device corresponding to a smallest distance among distances between the mobile terminal and the searched target devices, is selected.

Five, target devices corresponding to distances less than a set distance among distances between the mobile terminal and the searched target devices, is selected.

In the embodiments, by selecting the at least one target device from the searched target devices and setting selection conditions, the user may select the desired device. In order to select the desired device faster and more accurately, the user needs to move the mobile terminal close to the TV and points the transmitting direction of the UWB signal of the mobile terminal to the TV only, and the device to be connected may be easily selected.

The following two examples are used to illustrate.

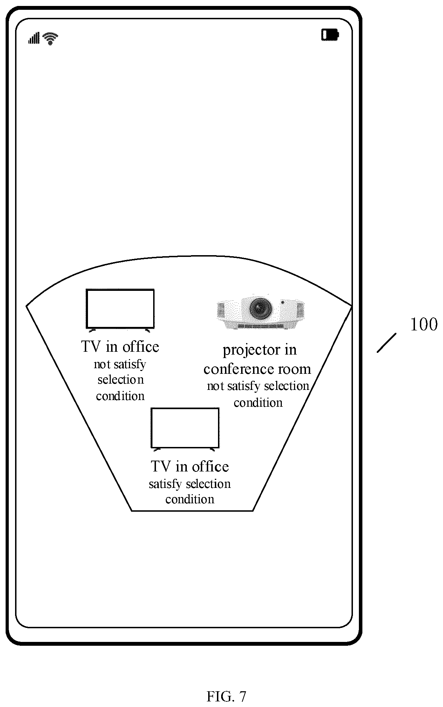

Example 1: when the selection condition is the above fourth condition, in the search result interface as illustrated in FIG. 7, it is displayed in the device area of each target device whether each target device satisfies the selection condition, making it easier for the user to distinguish the devices that satisfy the selection condition and the devices that do not satisfy the selection condition. Therefore, the subsequent actions may be carried out smoothly.

Example 2: the selection condition is that the difference between the angle between the transmitted directional signal and the directional signal of the mobile terminal and 180 degrees is less than 10 degrees, and the distance from the mobile terminal is less than 10 meters. The user holds the mobile terminal and aligns the transmitting direction of the UWB signal in the mobile terminal with a TV with a UWB function. After scanning multiple devices including this TV, the user may know that the angle between the transmitting direction of the UWB signal of the TV and the transmitting direction of the UWB signal of the mobile terminal is 185 degrees, and the distance between this TV and the mobile terminal is 3 meters. It is determined that the difference between the degrees of the above angle and 180 degrees is less than 10 degrees, and the above distance is less than 10 meters, so that the TV is determined as the target device.

In some embodiments, the selection may be performed at block S14 based on the touch operation of the user, which may include the following. A touch operation for the search result display interface is received. The target device corresponding to the touch operation is determined. The target device corresponding to the touch operation is set as the selected target device.

Alternatively, the action at block S14 is a process of automatic selection. After setting the selection condition, when multiple target devices are searched for, the device that satisfies the selection condition is automatically selected, and the connection may be automatically established after the device that satisfies the selection condition is selected, which save the operation process of the user.

In some embodiments, the method may further include the following between the action at block S15 and the action at block S16. A confirmation interactive interface is displayed. A first control for confirming sending the first data to the target device and/or a second control for confirming receiving the second data from the target device are displayed on the confirmation interactive interface. Touch information for the first control and/or the second control is received.

In the embodiments, after the user confirms, the first data is sent to the target device or the second data is received from the target device, so as to prevent the mobile terminal from making unnecessary connections in case of accidental touch.

In some embodiments, the first data at S17 is at least one of the following: screen projecting data, network access information, login account information, a multimedia file, and a trusted device logo, of the mobile terminal.

The second data at S17 is at least one of the following: a unique identifier, screen projecting data, network access information, login account information, and a multimedia file, of the target device.

The following is an example for description.

The user points the mobile terminal to the target device along the transmitting direction of the directional wireless signal, quickly searches for and selects the target device, and establishes the wireless connection with the target device.

Example 1: when the first data is the screen projecting data of the mobile terminal, the screen projecting data of the mobile terminal is sent to the target device through the established connection, so that the target device and the mobile terminal may display the screen display data of the mobile terminal synchronously to achieve the effect of rapid screen projecting.

Example 2: when the first data is the network access information of the mobile terminal, the network access information is sent to the target device through the established connection, so that the target device employs the network access information to quickly and automatically access the WIFI (Wireless Fidelity) network. Thus, the effect of the mobile terminal pulling the target device into the same WIFI network may be conveniently realized.

Example 3: when the first data is the multimedia file of the mobile terminal, the multimedia file is sent to the target device through the established connection, which facilitates and quickly completes the file transfer across devices.

Example 4, when the first data is the trusted device logo, the trusted device logo is sent to the target device through the established connection, and a new attribute may be added to the target device, so that the target device knows that it is trusted for this mobile terminal. The target device has a higher priority than other devices that are not trusted devices of the mobile terminal. In subsequent multiple connections, the target device may send the attribute of the trusted device for the mobile terminal, so that the mobile terminal may easily distinguish between trusted devices and untrusted devices.

Example 5: when the second data is the unique identifier of the target device, the unique identifier of the target device is received through the established connection, and the unique identifier of the device may be easily obtained, which may be used for subsequent other types of connections.

Example 6, when the second data is the screen projecting data of the target device, the screen projecting data of the target device is received through the established connection to achieve the effect of rapid screen projecting.

Example 7, when the second data is the network access information, the network access information is received through the established connection, so that the mobile terminal employs the network access information to quickly and automatically access the corresponding network.

Example 8, when the second data is the multimedia file, the multimedia file is received through the established connection, which facilitates and quickly completes the file transfer across devices.

The embodiments of the disclosure provide a method for interacting information, which is applicable to a device. The target device is a TV, a mobile phone, a tablet computer, etc.

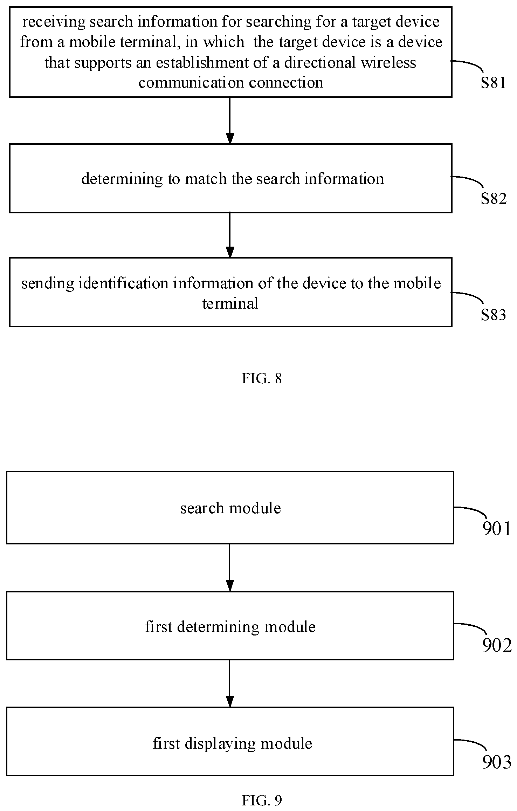

Referring to FIG. 8, FIG. 8 is a flow chart illustrating a method for interacting information, according to an exemplary embodiment. As illustrated in FIG. 8, the method may include the following.

At block S81, search information for searching for a target device is received from a mobile terminal, in which the target device is a device that supports an establishment of a directional wireless communication connection.

At block S82, it is determined to match the search information.

At block S83, identification information of the device is sent to the mobile terminal.

A detailed description is given below through several embodiments.

### Embodiment one

The mobile phone has the UWB function. The transmitting direction of the UWB signal of the mobile phone is by default a direction that is perpendicular to the upper edge of the mobile phone and faces outward.

There are 3 TVs with UWB functions in the conference room. The user wants to select one of them to perform the screen projecting.

The UWB function of the mobile phone is turned on. The user clicks on the projection control on the system setting interface of the mobile terminal, and the mobile terminal searches for devices that support the UWB functions. The mobile phone sends the UWB broadcast scan signal. After the scan is completed, a total of 3 TVs are searched, the search result interface is displayed, and the search result is displayed visually through the search result interface. As illustrate in FIG. 5, the icon of the TV, the name of the TV, the corresponding angle and distance are displayed in the device area of each TV.

The user clicks on the area corresponding to the TV at the bottom to confirm the selection of this TV.

The mobile terminal establishes the UWB wireless connection with this TV, and sends the projecting data of the mobile terminal to this TV, so that this TV may simultaneously play the screen content of the mobile terminal.

### Embodiment two

The process of the first half of Embodiment two is the same as that of Embodiment one. The difference is that after the user clicks on the area corresponding to the TV at the bottom to confirm the selection of this TV, a confirmation interactive interface is displayed on the mobile phone, and the confirmation interactive interface is displayed with a control for indicating a confirmation to send projecting data to the target device. The word "projection" is displayed on this control. After the user clicks on this control, it confirms to send the projecting data to the TV. After the mobile terminal receives this click signal, it may establish the UWB wireless connection with the TV, and send the projecting data of the mobile terminal to the TV, so that the TV may play the screen display content of the mobile terminal synchronously. Or, after the TV establishes the UWB wireless connection with the target device, a confirmation interactive interface is displayed. After the user clicks on the word "projection", the projecting data may be sent through the UWB wireless connection.

### Embodiment three

The condition for selecting the target device may be set as follows: the angle between the transmitting direction of the UWB signal and the transmitting direction of the UWB signal of the mobile phone is greater than 170 degrees and less than 190 degrees.

The mobile phone has the UWB function. The transmitting direction of the UWB signal of the mobile phone is by default a direction that is perpendicular to the upper edge of the mobile phone and faces outward.

There are 3 TVs with UWB functions in the conference room. The user wants to select one of them to perform the screen projecting.

The UWB function of the mobile phone is turned on. The user clicks on the projection control on the system setting interface of the mobile terminal, and the mobile terminal searches for devices that support the UWB functions. The mobile phone sends the UWB broadcast scan signal. After the scan is completed, a total of 3 TVs are searched, the search result interface is displayed, and the search result is displayed visually through the search result interface. As illustrate in FIG. 7, the icon of the TV, the name of the TV, and whether the selection condition is satisfied are displayed in the device area of each TV.

The user moves the mobile phone to change the transmitting direction of the UWB signal. "whether the selection condition is satisfied" displayed on the scanning result interface changes accordingly.

After the information of "whether the selection condition is satisfied" of each device remains unchanged for more than 30 seconds, the device that satisfies the selection condition is automatically determined as the selected target device. As illustrate in FIG. 7, the TV at the bottom is automatically selected.

The mobile terminal establishes the UWB wireless connection with the selected TV, and sends the projecting data of the mobile terminal to this TV, so that this TV may simultaneously play the screen content of the mobile terminal.

### Embodiment four

The condition for selecting the target device may be set as follows: the angle between the transmitting direction of the UWB signal and the transmitting direction of the UWB signal of the mobile phone is greater than 170 degrees and less than 190 degrees.

The mobile phone has the UWB function. The transmitting direction of the UWB signal of the mobile phone is by default a direction that is perpendicular to the upper edge of the mobile phone and faces outward.

The UWB function of the mobile phone is turned on. The user clicks on the control for synchronizing the network access information on the system setting interface of the mobile terminal and selects the corresponding network. The mobile phone sends the UWB broadcast scan signal. After the scan is completed, a total of 1 TV is searched. The search result interface is displayed, and the search result interface includes the TV icon and TV name of this TV. When the user clicks on the TV icon, the mobile terminal establishes the UWB wireless connection with this TV and sends the network access information to this TV, so that the TV automatically accesses the corresponding network through the network access information.

### Embodiment five

The first TV enters the network connection page.

The mobile phone has been connected to a WIFI network, and saves the network access information of this WIFI network. The mobile phone has the UWB function. The transmitting direction of the UWB signal of the mobile phone is by default a direction that is perpendicular to the upper edge of the mobile phone and faces outward.

The UWB function of the mobile phone is turned on. The user clicks on the control for synchronizing the network access information on the system setting interface of the mobile terminal and selects the corresponding network. The mobile phone sends the UWB broadcast scan signal. After the scan is completed, the first TV is searched. The two automatically establish the UWB connection. The network access information is sent to the first TV through the UWB connection. The first TV uses the received network access information to automatically add the network access information on the network connection page, and automatically access the above-mentioned WIFI network.

### Embodiment six

User A's mobile phone (mobile phone 1) has the UWB function, and this mobile phone has been connected to the company's WIFI network. User B's mobile phone (mobile phone 2) and User C's mobile phone (mobile phone 3) both have UWB functions, and User B and User C also both want to connect to this WIFI network.

The mobile phone of User B is placed closer to the mobile phone of User C. User A points the mobile phone to the direction of the mobile phone of User B and the mobile phone of User C.

The mobile phone of User A sends the UWB broadcast scan signal. After the scan is completed, the search result interface is displayed on the mobile phone, and a total of 3 mobile phones are scanned and displayed on the search result interface. User A's mobile phone automatically selects the target devices including mobile phone 2 and mobile phone 3. Mobile phone 1 automatically establishes UWB wireless connections with mobile phone 2 and mobile phone 3, and sends the network access information to the WIFI network to these two mobile phones. Mobile phone 2 and mobile phone 3 may employ the received network access information to automatically access the WIFI network. Therefore, mobile phone 1 may connect mobile phone 2 and mobile phone 3 to the same WIFI network simply and quickly.

The embodiments of the disclosure provide an apparatus for interacting information. The apparatus is applicable to a mobile terminal. The mobile terminal may be a computer device that may be used on the move, such as a mobile phone, a notebook computer, a tablet computer, and the like.

Referring to FIG. 9, FIG. 9 is a block diagram illustrating an apparatus for interacting information, according to an exemplary embodiment. As illustrated in FIG. 9, the apparatus may include a search module 901, a first determining module 902, and a first displaying module 903.

The search module 901 is configured to search for a target device that supports an establishment of a directional wireless communication connection.

The first determining module 902 is configured to determine at least one searched target device.

The first displaying module 903 is configured to display identification information of the at least one searched target device.

In some embodiments, the search module is further configured to search for the target device based on a set condition.

The set condition may include the following. An angle between a directional signal of the target device and a directional signal of the mobile terminal is within a set angle range, and/or, a distance between the target device and the mobile terminal is within a set distance range.

The embodiments of the disclosure provide an apparatus for interacting information. The apparatus may include the apparatus in FIG. 9, and the apparatus further includes a second displaying module, a first receiving module, a second determining module, an establishing module, and a processing module.

The second displaying module is configured to display at least one control, each control corresponding to one searched target device.

The first receiving module is configured to receive a touch signal for one control.

The second determining module is configured to determine a target device corresponding to the control to which the touch signal belongs.

The establishing module is configured to establish a directional wireless communication connection with the determined target device.

The processing module is configured to realize a data processing function corresponding to the control through the established directional wireless communication connection.

The embodiments of the disclosure provide an apparatus for interacting information. The apparatus may include the apparatus in FIG. 9, and the apparatus further includes a third displaying module.

The third displaying module is configured to display relative position information of the at least one searched target device and the mobile terminal.

In some embodiments, the third displaying module is further configured to display the relative position information of the at least one searched target device and the mobile terminal by: determining at least one device area on a display interface, each device area corresponding to one searched target device. A distribution position of each device area on the display interface, represents the relative position information of the corresponding target device and the mobile terminal.

The embodiments of the disclosure provide an apparatus for interacting information. The apparatus may include the apparatus in FIG. 9, and the apparatus further includes a selecting module, an establishing module, a sending module, and a second receiving module.

The selecting module is configured to select at least one target device from the searched target devices.

The establishing module is configured to establish a directional wireless communication connection with the at least one selected target device.

The sending module is configured to send first data to the at least one target device through the directional wireless communication connection.

The second receiving module is configured to receive second data from the at least one target device through the directional wireless communication connection.

In some embodiments, the selecting module is further configured to select the at least one target device from the searched target devices by at least one of: receiving a touch signal, and selecting a target device corresponding to a device area to which the touch signal belongs; selecting a target device corresponding to an angle closest to 180 degrees among angles between a directional signal transmitted by the mobile terminal and directional signals transmitted by the searched target devices; selecting target devices corresponding to angles where differences with 180 degrees are less than a set angle among angles between a directional signal transmitted by the mobile terminal and directional signals transmitted by the searched target devices; selecting a target device corresponding to a smallest distance among distances between the mobile terminal and the searched target devices; and selecting target devices corresponding to distances less than a set distance among distances between the mobile terminal and the searched target devices.

The embodiments of the disclosure provide an apparatus for interacting information. The apparatus may include the apparatus in FIG. 9. In some embodiments, the first data is at least one of: screen projecting data, network access information, login account information, a multimedia file, and a trusted device logo, of the mobile terminal. The second data is at least one of: a unique identifier, screen projecting data, network access information, login account information, and a multimedia file, of the target device.

The embodiments of the disclosure provide an apparatus for interacting information. The apparatus is applicable to a device. The device is a TV, a mobile phone, a notebook computer, a tablet computer, etc.

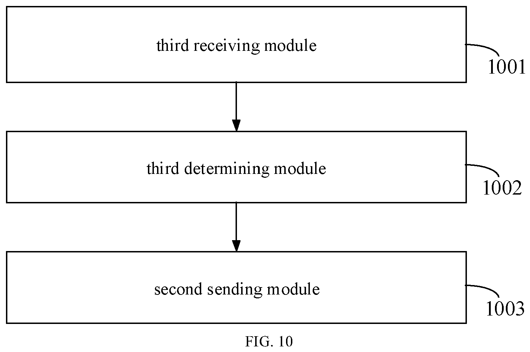

Referring to FIG. 10, FIG. 10 is a block diagram illustrating an apparatus for interacting information, according to an exemplary embodiment. As illustrated in FIG. 10, the apparatus may include a third receiving module 1001, a third determining module 1002, and a second sending module 1003.

The third receiving module 1001 is configured to receive search information for searching for a target device from a mobile terminal, in which the target device is a device that supports an establishment of a directional wireless communication connection.

The third determining module 1002 is configured to determine to match the search information.

The second sending module 1003 is configured to send identification information of the device to the mobile terminal.

The embodiments of the disclosure provide a device for interacting information. The device includes a processor; and a memory for storing instructions executable by the processor. The processor is configured to execute the instructions in the memory to perform actions of the method as described.

The embodiments of the disclosure provide a non-transitory computer-readable storage medium. The non-transitory computer-readable storage medium has stored therein instructions that, when executed by a processor, causes the processor to perform actions of the method as described.

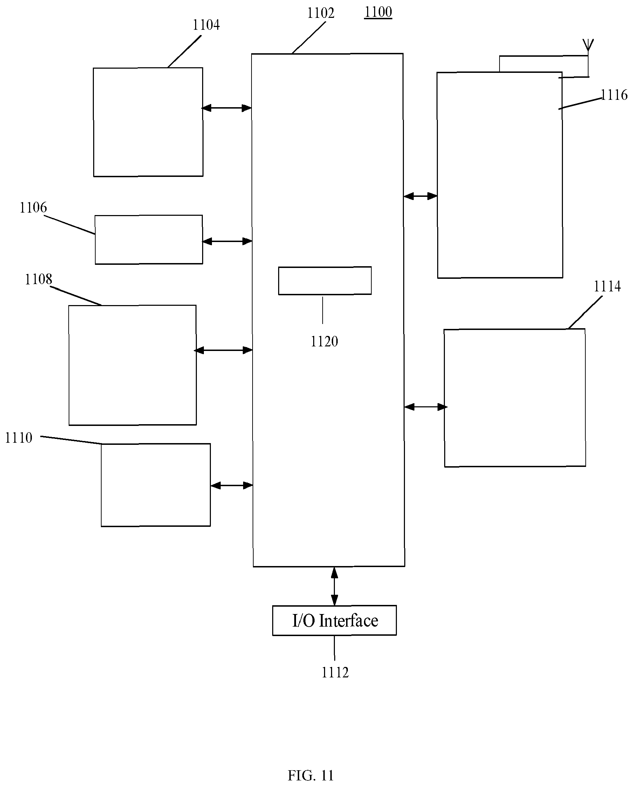

FIG. 11 is a block diagram illustrating a device 1100 for interacting information, according to an exemplary embodiment.

For example, the device 1100 may be a mobile phone, a computer, a digital broadcast terminal, a messaging device, a gaming console, a tablet, a medical device, exercise equipment, a personal digital assistant, and the like.

Referring to FIG. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 1104, executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for interacting information, for a mobile terminal, comprising:
searching for (S11) a target device that supports an establishment of a directional wireless communication connection based on a set condition, wherein the set condition comprises: an angle between a directional signal of the target device and a directional signal of the mobile terminal being within a set angle range;
determining (S12) at least one searched target device;
displaying (S13) identification information of the at least one searched target device;
selecting (S14) at least one target device from the searched target devices; and
establishing (S15) a directional wireless communication connection with the at least one selected target device, being **characterized by** that the directional wireless communication connection refers to a wireless communication connection that performs positioning and distance measurement;
the selecting (S14) the at least one target device from the searched target devices comprises at least one of:
selecting a target device corresponding to an angle closest to 180 degrees among angles between a directional signal transmitted by the mobile terminal and directional signals transmitted by the searched target devices; and
selecting target devices corresponding to angles where differences with 180 degrees are less than a set angle among angles between a directional signal transmitted by the mobile terminal and directional signals transmitted by the searched target devices;
wherein the selecting (S14) the at least one target device from the searched target devices further comprises at least one of:
receiving a touch signal, and selecting a target device corresponding to a device area to which the touch signal belongs;
wherein the control corresponding to a data processing function is displayed, so that after a user clicks the control for the target device, the touch signal for the control is received and the target device corresponding to the control to which the touch signal belongs is selected, a directional wireless communication connection with the target device is established, and the data processing function is executed automatically,
the searching for (S11) the target device that supports the establishment of the directional wireless communication connection based on the set condition comprises:
sending a UWB signal; and
marking an indicator of representing a direction of the UWB signal.

2. The method as claimed in claim 1, wherein,
the set condition further comprises: a distance between the target device and the mobile terminal being within a set distance range.

3. The method as claimed in claim 1 or 2, further comprising:
displaying at least one control, each control corresponding to one searched target device;
receiving a touch signal for one control;
determining a target device corresponding to the control to which the touch signal belongs;
establishing a directional wireless communication connection with the determined target device; and
realizing a data processing function corresponding to the control through the established directional wireless communication connection.

4. The method as claimed in any one of claims 1 to 3, further comprising:
displaying relative position information of the at least one searched target device and the mobile terminal.

5. The method as claimed in claim 4, wherein the displaying the relative position information of the at least one searched target device and the mobile terminal comprises:
determining at least one device area on a display interface, each device area corresponding to one searched target device;
in which a distribution position of each device area on the display interface represents the relative position information of the corresponding target device and the mobile terminal.

6. The method as claimed in any one of claims 1 to 5, further comprising:
sending (S16) first data to the at least one target device, or receiving (S16) second data from the at least one target device through the directional wireless communication connection.

7. The method as claimed in claim 6, wherein the selecting (S14) the at least one target device from the searched target devices further comprises at least one of:
selecting a target device corresponding to a smallest distance among distances between the mobile terminal and the searched target devices; and
selecting target devices corresponding to distances less than a set distance among distances between the mobile terminal and the searched target devices.

8. The method as claimed in claim 6 or 7, wherein,
the first data is at least one of:
screen projecting data, network access information, login account information, a multimedia file, and a trusted device logo, of the mobile terminal;
the second data is at least one of:
a unique identifier, screen projecting data, network access information, login account information, and a multimedia file, of the target device.

9. An apparatus for interacting information, for a mobile terminal, comprising:
a search module (901) configured to search for a target device that supports an establishment of a directional wireless communication connection based on a set condition, wherein the set condition comprises: an angle between a directional signal of the target device and a directional signal of the mobile terminal being within a set angle range;
a first determining module (902) configured to determine at least one searched target device;
a first displaying module (903) configured to display identification information of the at least one searched target device;
a selecting module configured to select at least one target device from the searched target devices;
an establishing module configured to establish a directional wireless communication connection with the at least one selected target device, being **characterized by** that the directional wireless communication connection refers to a wireless communication connection that performs positioning and distance measurement; and
a UWB module configured to send a UWB signal and to mark an indicator of representing a direction of the UWB signal;
the selecting module is configured to select at least one target device from the searched target devices by at least one of:
selecting a target device corresponding to an angle closest to 180 degrees among angles between a directional signal transmitted by the mobile terminal and directional signals transmitted by the searched target devices; and
selecting target devices corresponding to angles where differences with 180 degrees are less than a set angle among angles between a directional signal transmitted by the mobile terminal and directional signals transmitted by the searched target devices,
the selecting module is configured to select at least one target device from the searched target devices by at least one of:
receiving a touch signal, and selecting a target device corresponding to a device area to which the touch signal belongs;
wherein the control corresponding to a data processing function is displayed, so that after a user clicks the control for the target device, the touch signal for the control is received and the target device corresponding to the control to which the touch signal belongs is selected, a directional wireless communication connection with the target device is established, and the data processing function is executed automatically.

10. The apparatus as claimed in claim 9, wherein the search module (901) is further configured to search for the target device based on a set condition,
the set condition comprises: an angle between a directional signal of the target device and a directional signal of the mobile terminal being within a set angle range, and/or, a distance between the target device and the mobile terminal being within a set distance range.

11. The apparatus as claimed in claim 9 or 10, further comprising:
a second displaying module configured to display at least one control, each control corresponding to one searched target device;
a first receiving module configured to receive a touch signal for one control;
a second determining module configured to determine a target device corresponding to the control to which the touch signal belongs;
an establishing module configured to establish a directional wireless communication connection with the determined target device; and
a processing module is configured to realize a data processing function corresponding to the control through the established directional wireless communication connection.

12. The apparatus as claimed in any one of claims 9 to 11, further comprising:
a third displaying module configured to display relative position information of the at least one searched target device and the mobile terminal.

13. The apparatus as claimed in any one of claims 9 to 12, further comprising:
a sending module configured to send first data to the at least one target device through the directional wireless communication connection; and
a second receiving module configured to receive second data from the at least one target device through the directional wireless communication connection.

14. A computer-readable storage medium having stored therein instructions that, when executed by a processor, causes the processor to perform the method for interacting information as claimed in any one of claims 1 to 8.

## Patentansprüche

1. Verfahren zur Interaktion von Informationen für ein mobiles Endgerät, das umfasst:
Suche nach (S11) einem Zielgerät, das einen Aufbau einer gerichteten drahtlosen Kommunikationsverbindung auf der Grundlage einer festgelegten Bedingung unterstützt, wobei die festgelegte Bedingung Folgendes umfasst: ein Winkel zwischen einem gerichteten Signal des Zielgeräts und einem gerichteten Signal des mobilen Endgeräts liegt innerhalb eines festgelegten Winkelbereichs;
Bestimmen (S12) mindestens eines gesuchten Zielgeräts;
Anzeigen (S13) von Identifikationsinformationen des mindestens einen gesuchten Zielgeräts;
Auswählen (S14) mindestens eines Zielgeräts aus den gesuchten Zielgeräten; und Herstellen (S15) einer gerichteten drahtlosen Kommunikationsverbindung mit dem mindestens einen ausgewählten Zielgerät, **dadurch gekennzeichnet, dass** es sich bei der gerichteten drahtlosen Kommunikationsverbindung um eine drahtlose Kommunikationsverbindung handelt, die eine Positionsbestimmung und Entfernungsmessung durchführt;
wobei das Auswählen (S14) des mindestens einen Zielgeräts aus den gesuchten Zielgeräten mindestens eines aus Folgendem umfasst:
Auswählen eines Zielgeräts, der einem Winkel unter den Winkeln zwischen einem vom mobilen Endgerät gesendeten gerichteten Signal und von den gesuchten Zielgeräten gesendeten gerichteten Signalen entspricht, der 180 Grad am nächsten kommt; und
Auswählen von Zielgeräten, die einem Winkel entsprechen, bei denen Abweichungen von 180 Grad kleiner sind als ein festgelegter Winkel unter den Winkeln zwischen einem vom mobilen Endgerät gesendeten gerichteten Signal und von den gesuchten Zielgeräten gesendeten gerichteten Signalen;
wobei das Auswählen (S14) des mindestens einen Zielgeräts aus den gesuchten Zielgeräten ferner mindestens eines aus Folgendem umfasst:
Empfangen eines Berührungssignals und Auswählen eines Zielgeräts, das einem Gerätebereich entspricht, zu dem das Berührungssignal gehört;
wobei die einer Datenverarbeitungsfunktion entsprechende Steuerung angezeigt wird, sodass, nachdem ein Benutzer auf die Steuerung für das Zielgerät geklickt hat, das Berührungssignal für die Steuerung empfangen wird und das Zielgerät ausgewählt wird, das der Steuerung entspricht, zu dem das Berührungssignal gehört, eine gerichtete drahtlose Kommunikationsverbindung mit dem Zielgerät hergestellt wird und die Datenverarbeitungsfunktion automatisch ausgeführt wird,
wobei das Suchen nach (S11) dem Zielgerät, das den Aufbau der gerichteten drahtlosen Kommunikationsverbindung auf der Grundlage der festgelegten Bedingung unterstützt, umfasst:
Senden eines UWB-Signals; und
Markieren eines Indikators, der eine Richtung des UWB-Signals darstellt.

2. Verfahren nach Anspruch 1, wobei
die festgelegte Bedingung ferner umfasst: eine Entfernung zwischen dem Zielgerät und dem mobilen Endgerät, die innerhalb eines festgelegten Entfernungsbereichs liegt.

3. Verfahren nach Anspruch 1 oder 2, das ferner umfasst:
Anzeigen mindestens einer Steuerung, wobei jede Steuerung einem gesuchten Zielgerät entspricht;
Empfang eines Berührungssignals für eine Steuerung;
Ermitteln eines Zielgeräts, das der Steuerung entspricht, zu der das Berührungssignal gehört;
Herstellen einer gerichteten drahtlosen Kommunikationsverbindung mit dem ermittelten Zielgerät; und
Realisieren einer der Steuerung entsprechenden Datenverarbeitungsfunktion über die hergestellte gerichtete drahtlose Kommunikationsverbindung.

4. Verfahren nach einem der Ansprüche 1 bis 3, das ferner umfasst:
Anzeige von Informationen zur relativen Position des mindestens einen gesuchten Zielgeräts und des mobilen Endgeräts.

5. Verfahren nach Anspruch 4, wobei das Anzeigen der Informationen zur relativen Position des mindestens einen gesuchten Zielgeräts und des mobilen Endgeräts umfasst:
Bestimmen mindestens eines Gerätebereichs auf einer Anzeigeschnittstelle, wobei jeder Gerätebereich einem gesuchten Zielgerät entspricht;
wobei eine Verteilungsposition jedes Gerätebereichs auf der Anzeigeschnittstelle die Informationen zur relativen Position des entsprechenden Zielgeräts und des mobilen Endgeräts darstellt.

6. Verfahren nach einem der Ansprüche 1 bis 5, das ferner umfasst:
Senden (S16) erster Daten an das mindestens eine Zielgerät oder Empfangen (S16) zweiter Daten von dem mindestens einen Zielgerät über die gerichtete drahtlose Kommunikationsverbindung.

7. Verfahren nach Anspruch 6, wobei das Auswählen (S14) des mindestens einen Zielgeräts aus den gesuchten Zielgeräten ferner mindestens eines aus Folgendem umfasst:
Auswählen eines Zielgeräts, das einer geringsten Entfernung unter den Entfernungen zwischen dem mobilen Endgerät und den gesuchten Zielgeräten entspricht; und Auswählen von Zielgeräten, die einer Entfernung entsprechen, die kleiner ist als eine festgelegte Entfernung, unter den Entfernungen zwischen dem mobilen Endgerät und den gesuchten Zielgeräten.

8. Verfahren nach Anspruch 6 oder 7, wobei
die ersten Daten mindestens eines aus Folgendem sind:
Bildschirmprojektionsdaten, Netzwerkzugangsinformationen, Anmeldekontoinformationen, eine Multimediadatei und ein Logo für ein vertrauenswürdiges Gerät des mobilen Endgeräts;
die zweiten Daten mindestens eines aus Folgendem sind:
eine eindeutige Kennung, Bildschirmprojektionsdaten, Netzwerkzugangsinformationen, Anmeldekontoinformationen sowie eine Multimediadatei des Zielgeräts.

9. Vorrichtung zur Interaktion von Informationen für ein mobiles Endgerät, die aufweist:
ein Suchmodul (901), das so ausgebildet ist, dass es nach einem Zielgerät sucht, das einen Aufbau einer gerichteten drahtlosen Kommunikationsverbindung auf der Grundlage einer festgelegten Bedingung unterstützt, wobei die festgelegte Bedingung Folgendes umfasst: ein Winkel zwischen einem gerichteten Signal des Zielgeräts und einem gerichteten Signal des mobilen Endgeräts liegt innerhalb eines festgelegten Winkelbereichs;
ein erstes Bestimmungsmodul (902), das so ausgebildet ist, dass es mindestens ein gesuchtes Zielgerät bestimmt;
ein erstes Anzeigemodul (903), das so ausgebildet ist, dass es Identifikationsinformationen des mindestens einen gesuchten Zielgeräts anzeigt;
ein Auswahlmodul, das so ausgebildet ist, dass es mindestens ein Zielgerät aus den gesuchten Zielgeräten auswählt;
ein Verbindungsaufbaumodul, das so ausgebildet ist, dass es eine gerichtete drahtlose Kommunikationsverbindung mit dem mindestens einen ausgewählten Zielgerät herstellt, **dadurch gekennzeichnet, dass** es sich bei der gerichteten drahtlosen Kommunikationsverbindung um eine drahtlose Kommunikationsverbindung handelt, die eine Positionsbestimmung und Entfernungsmessung durchführt; und
ein UWB-Modul, das so ausgebildet ist, dass es ein UWB-Signal sendet und einen Indikator markiert, der eine Richtung des UWB-Signals darstellt;
wobei das Auswahlmodul so ausgebildet ist, dass es mindestens ein Zielgerät aus den gesuchten Zielgeräten durch mindestens eines aus Folgendem auswählt:
Auswählen eines Zielgeräts, der einem Winkel unter den Winkeln zwischen einem vom mobilen Endgerät gesendeten gerichteten Signal und von den gesuchten Zielgeräten gesendeten gerichteten Signalen entspricht, der 180 Grad am nächsten kommt; und
Auswählen von Zielgeräten, die einem Winkel entsprechen, bei denen Abweichungen von 180 Grad kleiner sind als ein festgelegter Winkel unter den Winkeln zwischen einem vom mobilen Endgerät gesendeten gerichteten Signal und von den gesuchten Zielgeräten gesendeten gerichteten Signalen;
wobei das Auswahlmodul so ausgebildet ist, dass es mindestens ein Zielgerät aus den gesuchten Zielgeräten durch mindestens eines aus Folgendem auswählt:
Empfangen eines Berührungssignals und Auswählen eines Zielgeräts, das einem Gerätebereich entspricht, zu dem das Berührungssignal gehört;
wobei die einer Datenverarbeitungsfunktion entsprechende Steuerung angezeigt wird, sodass, nachdem ein Benutzer auf die Steuerung für das Zielgerät geklickt hat, das Berührungssignal für die Steuerung empfangen wird und das Zielgerät ausgewählt wird, das der Steuerung entspricht, zu dem das Berührungssignal gehört, eine gerichtete drahtlose Kommunikationsverbindung mit dem Zielgerät hergestellt wird und die Datenverarbeitungsfunktion automatisch ausgeführt wird.

10. Vorrichtung nach Anspruch 9, wobei das Suchmodul (901) ferner so ausgebildet ist, dass es anhand einer festgelegten Bedingung nach dem Zielgerät sucht,
wobei die festgelegte Bedingung umfasst: ein Winkel zwischen einem gerichteten Signal des Zielgeräts und einem gerichteten Signal des mobilen Endgeräts liegt innerhalb eines festgelegten Winkelbereichs und/oder eine Entfernung zwischen dem Zielgerät und dem mobilen Endgerät liegt innerhalb eines festgelegten Entfernungsbereichs.

11. Vorrichtung nach Anspruch 9 oder 10, die ferner aufweist:
ein zweites Anzeigemodul, das so ausgebildet ist, dass es mindestens eine Steuerung anzeigt, wobei jede Steuerung einem gesuchten Zielgerät entspricht;
ein erstes Empfangsmodul, das so ausgebildet ist, dass es ein Berührungssignal für eine Steuerung empfängt;
ein zweites Bestimmungsmodul, das so ausgebildet ist, dass es ein Zielgerät bestimmt, das der Steuerung entspricht, zu der das Berührungssignal gehört;
ein Verbindungsaufbaumodul, das so ausgebildet ist, dass es eine gerichtete drahtlose Kommunikationsverbindung mit dem ermittelten Zielgerät herstellt; und
ein Verarbeitungsmodul, das so ausgebildet ist, dass es über die hergestellte gerichtete drahtlose Kommunikationsverbindung eine der Steuerung entsprechende Datenverarbeitungsfunktion realisiert.

12. Vorrichtung nach einem der Ansprüche 9 bis 11, die ferner aufweist:
ein drittes Anzeigemodul, das so ausgebildet ist, dass es Informationen zur relativen Position des mindestens einen gesuchten Zielgeräts und des mobilen Endgeräts anzeigt.

13. Vorrichtung nach einem der Ansprüche 9 bis 12, die ferner aufweist:
ein Sendemodul, das so ausgebildet ist, dass es erste Daten über die gerichtete drahtlose Kommunikationsverbindung an das mindestens eine Zielgerät sendet; und ein zweites Empfangsmodul, das so ausgebildet ist, dass es zweite Daten von dem mindestens einen Zielgerät über die gerichtete drahtlose Kommunikationsverbindung empfängt.

14. Computerlesbares Speichermedium mit darauf gespeicherten Anweisungen, die, wenn sie von einem Prozessor ausgeführt werden, den Prozessor veranlassen, das Verfahren zur Interaktion von Informationen nach einem der Ansprüche 1 bis 8 durchzuführen.

## Revendications

1. Procédé d'interaction d'informations, pour un terminal mobile, comprenant les étapes consistant à :
rechercher (S11) un dispositif cible qui prend en charge un établissement d'une connexion de communication sans fil directionnelle sur la base d'une condition définie, dans lequel la condition définie comprend : un angle entre un signal directionnel du dispositif cible et un signal directionnel du terminal mobile qui s'inscrit dans une plage d'angles définis ;
déterminer (S12) au moins un dispositif cible recherché ;
afficher (S13) des informations d'identification de l'au moins un dispositif cible recherché ;
sélectionner (S14) au moins dispositif cible parmi les dispositifs cibles recherchés ; et
établir (S15) une connexion de communication sans fil directionnelle avec l'au moins un dispositif cible sélectionné, **caractérisé en ce que** la connexion de communication sans fil directionnelle se rapporte à une connexion de communication sans fil qui met en œuvre un positionnement et une mesure de distance ;
l'étape de sélection (S14) de l'au moins un dispositif cible parmi les dispositifs cibles recherchés comprend au moins une étape consistant à :
sélectionner un dispositif cible correspondant à un angle le plus proche de 180 degrés parmi des angles entre un signal directionnel transmis par le terminal mobile et des signaux directionnels transmis par les dispositifs cibles recherchés ; et
sélectionner des dispositifs cibles correspondant à des angles pour lesquels des différences par rapport à 180 degrés sont inférieures à un angle défini parmi des angles entre un signal directionnel transmis par le terminal mobile et des signaux directionnels transmis par les dispositifs cibles recherchés ;
dans lequel l'étape de sélection (S14) de l'au moins un dispositif cible parmi les dispositifs cibles recherchés comprend en outre au moins une étape consistant à :
recevoir un signal tactile, et sélectionner un dispositif cible correspondant à une zone de dispositif à laquelle appartient le signal tactile ;
dans lequel la commande correspondant à une fonction de traitement de données est affichée, de sorte que, après une opération de clic de la commande du dispositif cible par un utilisateur, le signal tactile de la commande est reçu et le dispositif cible correspondant à la commande à laquelle appartient le signal tactile est sélectionné, une connexion de communication sans fil directionnelle avec le dispositif cible est établie, et que la fonction de traitement de données est exécutée automatiquement,
l'étape de recherche (S11) du dispositif cible qui prend en charge l'établissement de la connexion de communication sans fil directionnelle sur la base de la condition définie consiste à :
envoyer un signal à ULB ; et
marquer un indicateur de représentation d'une direction du signal à ULB.

2. Procédé selon la revendication 1, dans lequel,
la condition définie comprend en outre : une distance entre le dispositif cible et le terminal mobile qui s'inscrit dans une plage de distances définies.

3. Procédé selon la revendication 1 ou la revendication 2, comprenant en outre les étapes consistant à :
afficher au moins une commande, chaque commande correspondant à un dispositif cible recherché ;
recevoir un signal tactile destiné à une commande ;
déterminer un dispositif cible correspondant à la commande à laquelle appartient le signal tactile ;
établir une connexion de communication sans fil directionnelle avec le dispositif cible déterminé ; et
exécuter une fonction de traitement de données correspondant à la commande par l'intermédiaire de la connexion de communication sans fil directionnelle établie.

4. Procédé selon l'une quelconque des revendications 1 à 3, comprenant en outre l'étape consistant à :
afficher des informations de position relative de l'au moins un dispositif cible recherché et du terminal mobile.

5. Procédé selon la revendication 4, dans lequel l'étape d'affichage des informations de position relative de l'au moins un dispositif cible recherché et du terminal mobile consiste à :
déterminer au moins une zone de dispositif sur une interface d'affichage, chaque zone de dispositif correspondant à un dispositif cible recherché ;
dans lequel une position de distribution de chaque zone de dispositif sur l'interface d'affichage représente les informations de position relative du dispositif cible correspondant et du terminal mobile.

6. Procédé selon l'une quelconque des revendications 1 à 5, comprenant en outre l'étape consistant à :
envoyer (S16) des premières données à l'au moins un dispositif cible, ou recevoir (S16) des secondes données en provenance de l'au moins un dispositif cible par l'intermédiaire de la connexion de communication sans fil directionnelle.

7. Procédé selon la revendication 6, dans lequel l'étape de sélection (S14) de l'au moins un dispositif cible parmi les dispositifs cibles recherchés consiste en outre à :
sélectionner un dispositif cible correspondant à une distance la plus petite parmi des distances entre le terminal mobile et les dispositifs cibles recherchés ; et/ou
sélectionner des dispositifs cibles correspondant à des distances inférieures à une distance définie parmi des distances entre le terminal mobile et les dispositifs cibles recherchés.

8. Procédé selon la revendication 6 ou la revendication 7, dans lequel,
les premières données sont au moins les uns :
de données de projection d'écran, d'informations d'accès au réseau, d'informations de compte de connexion, d'un fichier multimédia, et d'un logo de dispositif de confiance, du terminal mobile ;
les secondes données sont au moins les uns :
d'un identifiant unique, de données de projection d'écran, d'informations d'accès au réseau, d'informations de compte de connexion, et d'un fichier multimédia, du dispositif cible.

9. Appareil d'interaction d'informations, pour un terminal mobile, comprenant :
un module de recherche (901) configuré pour rechercher un dispositif cible qui prend en charge un établissement d'une connexion de communication sans fil directionnelle sur la base d'une condition définie, dans lequel la condition définie comprend : un angle entre un signal directionnel du dispositif cible et un signal directionnel du terminal mobile qui s'inscrit dans une plage d'angles définis ;
un premier module de détermination (902) configuré pour déterminer au moins un dispositif cible recherché ;
un premier module d'affichage (903) configuré pour afficher des informations d'identification de l'au moins un dispositif cible recherché ;
un module de sélection configuré pour sélectionner au moins un dispositif cible parmi les dispositifs cibles recherchés ;
un module d'établissement configuré pour établir une connexion de communication sans fil directionnelle avec l'au moins un dispositif cible sélectionné, **caractérisé en ce que** la connexion de communication sans fil directionnelle se rapporte à une connexion de communication sans fil qui met en œuvre un positionnement et une mesure de distance ; et
un module à ULB configuré pour envoyer un signal à ULB et pour marquer un indicateur de représentation d'une direction du signal à ULB ;
le module de sélection est configuré pour sélectionner au moins un dispositif cible parmi les dispositifs cibles recherchés en exécutant au moins une étape consistant à :
sélectionner un dispositif cible correspondant à un angle le plus proche de 180 degrés parmi des angles entre un signal directionnel transmis par le terminal mobile et des signaux directionnels transmis par les dispositifs cibles recherchés ; et
sélectionner des dispositifs cibles correspondant à des angles pour lesquels des différences par rapport à 180 degrés sont inférieures à un angle défini parmi des angles entre un signal directionnel transmis par le terminal mobile et des signaux directionnels transmis par les dispositifs cibles recherchés,
le module de sélection est configuré pour sélectionner au moins un dispositif cible parmi les dispositifs cibles recherchés en exécutant au moins une étape consistant à :
recevoir un signal tactile, et sélectionner un dispositif cible correspondant à une zone de dispositif à laquelle appartient le signal tactile ;
dans lequel la commande correspondant à une fonction de traitement de données est affichée, de sorte que, après une opération de clic de la commande du dispositif cible par un utilisateur, le signal tactile de la commande est reçu et le dispositif cible correspondant à la commande à laquelle appartient le signal tactile est sélectionné, une connexion de communication sans fil directionnelle avec le dispositif cible est établie, et que la fonction de traitement de données est exécutée automatiquement.

10. Appareil selon la revendication 9, dans lequel le module de recherche (901) est en outre configuré pour rechercher le dispositif cible sur la base d'une condition définie,
la condition définie comprend : un angle entre un signal directionnel du dispositif cible et un signal directionnel du terminal mobile qui s'inscrit dans une plage d'angles définis, et/ou, une distance entre le dispositif cible et le terminal mobile qui s'inscrit dans une plage de distances définies.

11. Appareil selon la revendication 9 ou la revendication 10, comprenant en outre :
un deuxième module d'affichage configuré pour afficher au moins une commande, chaque commande correspondant à un dispositif cible recherché ;
un premier module de réception configuré pour recevoir un signal tactile destiné à une commande ;
un second module de détermination configuré pour déterminer un dispositif cible correspondant à la commande à laquelle appartient le signal tactile ;
un module d'établissement configuré pour établir une connexion de communication sans fil directionnelle avec le dispositif cible déterminé ; et
un module de traitement configuré pour exécuter une fonction de traitement de données correspondant à la commande par l'intermédiaire de la connexion de communication sans fil directionnelle établie.

12. Appareil selon l'une quelconque des revendications 9 à 11, comprenant en outre :
un troisième module d'affichage configuré pour afficher des informations de position relative de l'au moins un dispositif cible recherché et du terminal mobile.

13. Appareil selon l'une quelconque des revendications 9 à 12, comprenant en outre :
un module d'envoi configuré pour envoyer des premières données à l'au moins un dispositif cible par l'intermédiaire de la connexion de communication sans fil directionnelle ; et
un second module de réception configuré pour recevoir des secondes données en provenance de l'au moins un dispositif cible par l'intermédiaire de la connexion de communication sans fil directionnelle.

14. Support d'informations lisible par ordinateur comportant des instructions maintenues en son sein qui, lorsqu'elles sont exécutées par un processeur, amènent le processeur à mettre en œuvre le procédé d'interaction d'informations selon l'une quelconque des revendications 1 à 8.
